# EUROPEAN PATENT SPECIFICATION

(11) **EP 0 863 323 B1**
(45) Date of publication and mention of the grant of the patent: **26.08.2009**
(21) Application number: 97941274.9
(22) Date of filing: 29.09.1997
(51) Int. Cl.: F16C 29/06

(54) **METHOD OF MANUFACTURING BEARING COMPONENTS HAVING ROLLING SURFACES FOR ROLLING ELEMENTS**
HERSTELLUNGSVERFAHREN VON LAGERTEILEN MIT LAUFFLÄCHEN FÜR WALZKÖRPER
PROCEDE POUR LA FABRICATION DE COMPOSANTS DE PALIERS AYANT DES SURFACES DE ROULEMENT POUR ELEMENTS DE ROULEMENT

(30) Priority: 02.10.1996 JP 26206996
(43) Date of publication of application: 09.09.1998
(73) Proprietor: THK CO. LTD., Tokyo 141 (JP)
(72) Inventor: TOMITA, Masashiro, c/o THK Co., Ltd., Tokyo 141-0031 (JP)
(74) Representative: Vossius & Partner
(86) International application number: PCT/JP1997/003471
(87) International publication number: WO 1998/014709

(56) References cited:
- JP-A- 6 026 495
- JP-A- 6 128 700
- JP-A- 8 285 030
- JP-A- 55 107 098
- JP-U- 3 017 421
- JP-U- 62 185 975
- US-A- 3 748 722
- US-A- 5 013 525
- R. BAUER: "Löten und Härten von Bauteilen und Werkzeugen in Vakuumanlagen" HÄRTEREI-TECHNISCHE MITTEILUNGEN., vol. 36, no. 2, 1981, pages 81-85, XP002088018 MÜNCHEN, DE
- O. A. POPOV ET AL.: "VACUUM QUENCHING OF BEARING RACES OF STEEL 95KH18" METAL SCIENCE AND HEAT TREATMENT., vol. 19, no. 7/8, 1977, pages 641-643, XP002088019 NEW YORK, US
- DATABASE WPI Section Ch, Week 8532 Derwent Publications Ltd., London, GB; Class M24, AN 85-194969 XP002088020 & SU 1 084 318 A (BEARING IND RES DES) , 7 April 1984

## Description

### Technical Field

The present invention relates to a method of fabricating a bearing part having a rolling face for a rolling body such as a ball, a roller or the like, in details, to a method of fabrication thereof capable of easily forming a bearing part having a complicated shape.

### Background Art

According to a rolling bearing in which a pair of bearing parts move relative to each other in accordance with rolling of a rolling body such as a ball, a roller or the like, although a rolling face for the rolling body needs to form with high accuracy by subjecting the bearing parts to polishing, form rolling or the like, there are cases where the forming is difficult to carry out and the accurate formation is difficult to perform depending on shapes of the bearing parts.

Hence, as a method of fabricating such bearing parts, the applicant has already proposed a fabrication method in which the bearing part is formed by dividing it into a bearing main body having a rolling face for a rolling body and other attachment body and are bonded later into a single bearing part (Japanese Patent Application No. JP 110004/1995 published as JP 08 285 030 A). Specifically, this is a method of fabricating a ball screw in which an extended part is bonded to one end of a ball screw shaft where a ball rolling face in a spiral shape is formed by diffusion bonding and is provided with an advantage where even when an outer diameter of the extended part is larger than an outer diameter of the ball screw shaft, the ball rolling face can be formed by form rolling.

In this case, the above-described diffusion bonding is a method in which a pair of bonded materials are brought into close contact with each other and pressed to a degree to cause plastic deformation as less as possible under a temperature condition of melting points of the bonded materials or lower and the bonding is carried out by utilizing diffusion of atoms caused between bonded faces (JIS) which includes a method of bonding the bonded materials by bringing them into direct press contact with each other and a method of bonding them by interposing an insert member of an amorphous sheet or the like between the bonded materials.

Meanwhile, although in order to promote wear resistance by increasing the hardness of a rolling face for a rolling body, quenching treatment needs to perform in respect of a bearing main body and an attachment body bonded together after finishing the diffusion bonding, according to the fabrication method described above, the bearing main body and the attachment body are heated to a bonding temperature in the diffusion bonding, the bonding temperature is normally higher than temperature of quenching treatment of the bearing main body and accordingly, when the bearing main body and the attachment body are cooled after finishing the diffusion bonding, the quenching treatment is naturally carried out in respect of the rolling face of the bearing main body without providing special steps.

However, when the quenching treatment is carried out from such a bonding temperature, although a desired hardness can be provided to the rolling face, crystal grains of the metallographic structure are coarsened and therefore, there poses a problem in which a stable metallographic structure is not obtained and constant quality cannot be ensured to the bearing parts.

Further, although according to the conventional fabrication method mentioned above, the diffusion bonding is carried out by high frequency induction heating, in such a method, the skin of the bearing part is oxidized in heating the part at the bonding temperature and therefore, scale oxides need to scrape off by shot peening or the like after finishing the bonding and there poses a problem in which not only the fabrication steps are similarly complicated but also the production cost is increased.

US 3 748 722 A relates to the production of hollow components for rolling element bearings by diffusion welding. Before diffusion welding the surfaces of the rolling element components are lapped to ensure flatness for optimum mating contact and assembled by placing the surfaces in contact with each other. The assembled components are placed into a contoured assembly jig and the jig is placed into a vacuum chamber and then heated under a vacuum and wherein a low welding pressure is maintained on the assembled components. After the components have been raised to the high temperature under the vacuum, a low pressure is maintained for a predetermined time to diffusion weld the components at the surfaces. The welded rolling elements may be heat treated by heating and oil quenching.

R. Bauer: "Löten und Härten von Bauteilen und Werkzeugen in Vakuumanlagen", Härterei-Technische Mitteilungen, vol. 36, 1981, no. 2, pages 81-85, relates to combined soldering and hardening processes of structural components and tools in vacuum systems, wherein several heat treatments are possible within a single furnace campaign. In certain cases it may be necessary to clean the surfaces of the components before heat treatment. Furthermore, the introduction part of this document describes the application of a soldering additive (i.e. a pressurized soldering paste) to the surfaces to be joined by soldering.

The present invention has been carried out in view of the above problems and it is an object of the present invention to provide a method of fabricating a bearing part capable of promoting quality of the bearing part after quenching treatment and capable of restraining an increase in fabrication cost by simplifying fabrication steps in fabricating the bearing part from a plurality of members by using diffusion bonding.

In order to achieve the above-described object, according to an aspect of the present invention, there is provided a method of fabricating a bearing part including a first step of putting in an atmospheric furnace and bringing into press contact a bearing main body where a rolling face for a rolling body is formed with an attachment body intended to bond thereto with an amorphous sheet being interposed as an insert member between the bearing main body and the attachment body and heating the atmospheric furnace to a predetermined bonding temperature to thereby bond the bearing main body with the attachment body by diffusion bonding, a second step of controlling a temperature of the atmospheric furnace to a heat treatment temperature suitable for quenching the bearing main body and holding the heat treatment temperature for a predetermined time while maintaining the state of bonding the bearing main body with the attachment body, and a third step of carrying out a quenching treatment in respect of the rolling face of the bearing main body by cooling the bearing main body and the attachment body bonded to each other by introducing a cooling gas into the atmospheric furnace.

According to the method of the present invention constituted as mentioned above, the quenching treatment is not carried out by cooling the bearing main body and the attachment body bonded together by the diffusion bonding abruptly from the bonding temperature but the quenching treatment is carried out after holding these for a predetermined time at the heat treatment temperature suitable for quenching the bearing main body and accordingly, coarsening of crystal grains of a metallographic structure thereof as quenched can be prevented and stable quality can be obtained.

Further, the bearing main body and the attachment body are heated in the first step and the second step by using the atmospheric furnace and accordingly, scale oxides are difficult to cause on surfaces of these and a step of scraping off the scale oxides needs not to provide after quenching treatment and accordingly, simplification of fabrication steps and a reduction in fabrication cost can be achieved.

Particularly, when the bearing main body and the attachment body are heated by replacing the atmosphere at inside of the atmospheric furnace by an inert gas, oxidation of these can completely be prevented and further, the bearing main body and the attachment body can effectively be cooled in the third step by increasing a flow rate of the inert gas.

Further, in the third step of the method of the present invention, the quenching treatment is carried out not by liquid cooling of water cooling, oil cooling or the like but by gas cooling using a gas for restraining heat treatment strain of a product and preventing deformation or change in dimension of a completed bearing part by retarding a cooling rate. The inventor of the application has confirmed that when the cooling rate was 0.2-10 °C/sec, a hardness necessary and sufficient for the rolling face for a rolling body (HRC 58-64, HV 653-800) could be ensured while restraining occurrence of heat treatment strain.

### Brief Description of Drawings

Fig. 1 is a perspective view showing a rolling bearing for planar movement fabricated by a method according to the present invention.
Fig. 2 is a perspective view showing a rolling bearing for linear movement used in fabricating the roller bearing for planar movement shown by Fig. 1.
Fig. 3 is a disassembled perspective view for explaining a first step of the method according to the present invention.
Fig. 4 is a disassembled perspective view for explaining a second step of the method according to the present invention.
Fig. 5 is a graph showing a change in heating temperature of an atmospheric furnace according to the method of the present invention.
Fig. 6 is a graph showing a relationship between a quenching treatment rate and a hardness of bearing part according to the method of the present invention.
Fig. 7 is a perspective view showing a bearing part fabricated by the method according to the present invention.

### Explanation of Notations

1, 3, 5···Rolling faces, 2, 4···Track rails, 6··· Slider

### Best Mode for Carrying out the Invention

A detailed explanation will be given of a method of fabricating a bearing part having a rolling face for a rolling body according to the present invention in reference to the attached drawings as follows.

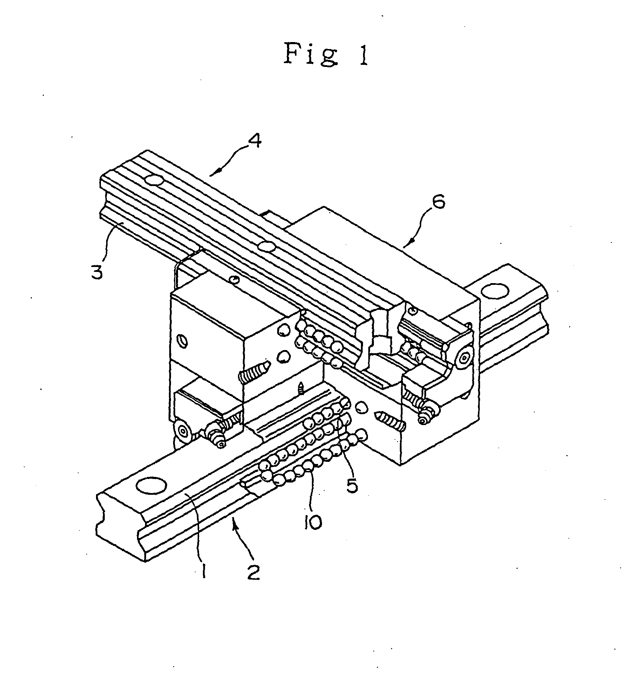

Fig. 1 shows a rolling bearing for planar movement fabricated by a method according to the present invention. The rolling bearing is constituted by a lower track rail 2 arranged above a fixed portion (not illustrated) and having a rolling face 1 for balls 10 along the longitudinal direction, an upper track rail 4 arranged on the side of a lower face of a table (not illustrated) and having a rolling face 3 for the balls 10 orthogonal to the lower track rail 2 and along its longitudinal direction and a slider 6 having rolling faces 5 for the balls 10 opposed to the rolling faces of the lower and the upper track rails 2 and 4 and engaged with both of the lower and the upper track rails 2 and 4 in which the slider 6 moves along the lower track rail 2 and guides the upper track rail 4 along the longitudinal direction by which the table mentioned above can be guided simultaneously in XY directions only by the slider 6.

Conventionally, according to a method of fabricating the slider 6, after forming a lumpish block made of a metal into a regular hexahedron, recess portions for engaging with the lower track rail 2 and the upper track rail 4 are formed on a bottom face and a top face thereof by machining and meanwhile, the rolling faces 5 for the balls 10 are formed at predetermined positions in the recess portions by polishing.

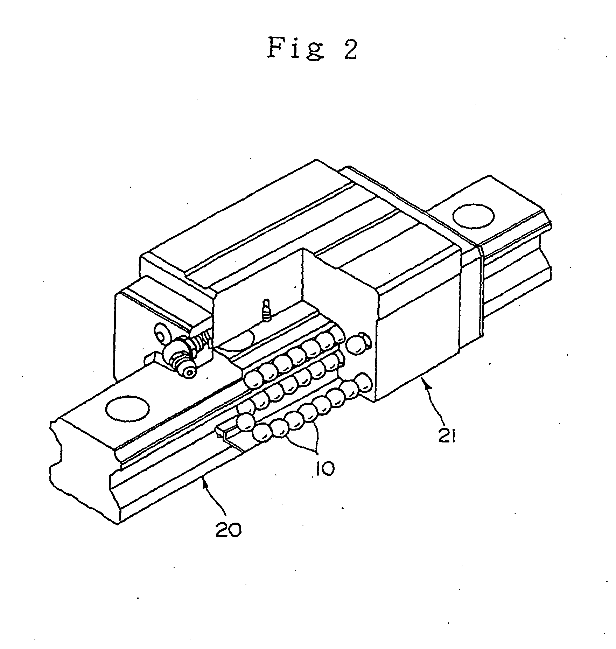

However, the rolling bearing for planar movement shown by Fig. 1 is provided with a constitution the same as a constitution in which two of rolling bearings for linear movement shown by Fig. 2, that is, general bearings for linear movement in each of which a slider 21 is moved along the longitudinal direction of a track rail 20, are combined and the respective sliders 21 are bonded by back face coupling.

Therefore, according to the embodiment, in order to dispense with time and labor in machining the slider 6 from a metal block, two pieces of the existing sliders 21 for linear movement bearings are bonded at a predetermined attitude by which the slider 6 for a planar movement bearing mentioned above is fabricated.

A specific fabrication procedure of the slider 6 will be shown as follows and the composition of a metal material used in the slider 21 is shown in the following table.

**Table**

| Chemical composition | wt% |
|---|---|
| C | 0.50 - 0.55 |
| Si | 0.30 or lower |
| Mn | 0.30 or lower |
| P | 0.03 or lower |
| S | 0.03 or lower |
| Ni | 0.60 or lower |
| Cr | 10.00 - 11.00 |
| MO | 0.35 - 0.65 |
| Cu | 0.20 or lower |
| O₂ | 15 ppm or lower |

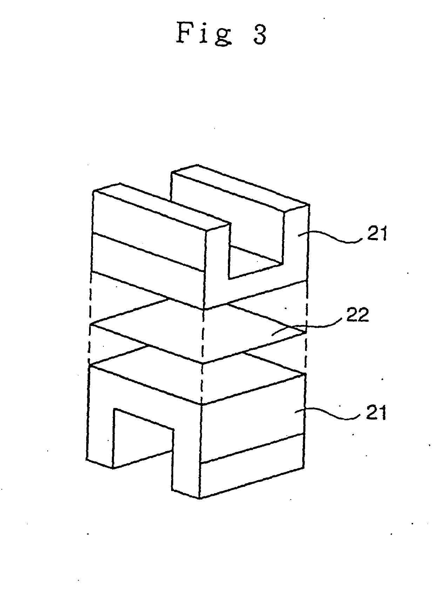

First, after preparing two pieces of the sliders 21 for linear movement bearings, as shown by Fig. 3, top faces of the sliders 21 are opposed to each other and made to overlap such that directions of recess portions for engaging with the track rails 20 are orthogonal to each other. In this case, an amorphous sheet 22 as an insert member is interposed between the sliders 21.

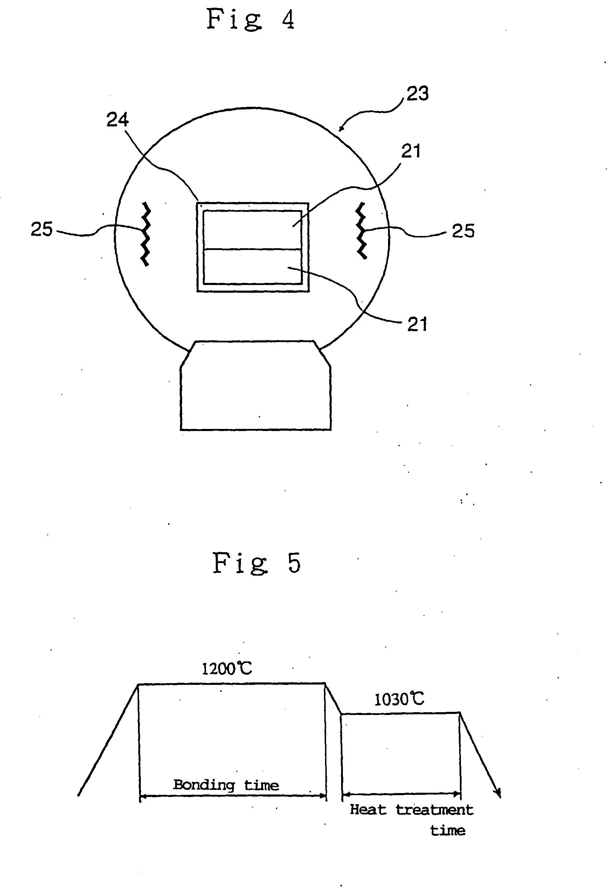

Next, the couple of sliders 21 overlapped in such a way are put into an atmospheric furnace 23 shown by Fig. 4, where the diffusion bonding is carried out between the both sliders 21 by being heated to a predetermined bonding temperature. In this case, the overlapped sliders 21 are put into the atmospheric furnace 23 in a state where they are constrained by a jig 24 such that the respective sliders 21 and the amorphous sheet 22 are tightly brought into close contact with each other. Incidentally, notation 25 in Fig. 4 designates heaters installed at inside of the atmospheric furnace 23.

As specific bonding conditions in the diffusion bonding, the bonding temperature at inside of the atmospheric furnace 23 is 1200 °C, the press contact force between the both sliders is 2 MPa and the bonding time is 30 min. Further, the atmosphere in the atmospheric furnace is replaced by nitrogen gas to prevent the sliders from oxidizing caused by heating the sliders in bonding them and pressure in the furnace is reduced to 10⁻¹ - 10⁻² torr.

Under the conditions, the amorphous sheet 22 sandwiched by the pair of sliders 21 is melted and diffused into the metallographic structure from faces bonded with the sliders 21. Thereby, while the both sliders 21 are solidly integrated in the diffusion bonding, no burr is caused at the bonded portions and the slider 6 for planar movement bearing which is excellent in outlook and is provided with sufficient bonding strength can be fabricated at a low cost. Further, although according to the embodiment, an amorphous sheet of Fe-C-Si-B series is used as the insert member, the sufficient bonding strength can be obtained even with other insert member depending on the material of the slider.

When the bonding time has expired, while maintaining the state of bonding as shown by Fig. 4, the temperature at inside of the atmospheric furnace 23 is changed to a heat treatment temperature optimum to quenching treatment and the heat treatment temperature is held by a predetermined time (refer to Fig. 5). The heat treatment temperature and the holding time are determined in accordance with the material of the slider 6 (21) where the ball rolling face 5 is formed and in this embodiment, they are 1030 °C and 30 min.

When the heat treatment time has elapsed, the flow rate of nitrogen gas at inside of the atmospheric furnace 23 is increased by which the quenching treatment is carried out by cooling the slider 6 held in the jig 24. In this way, the desired hardness can be provided to the ball rolling face 5. Further, when the quenching treatment is carried out by gas cooling in this way, cooling rate is slow and accordingly, the slider 6 as quenched can be prevented from causing heat treatment strain as less as possible.

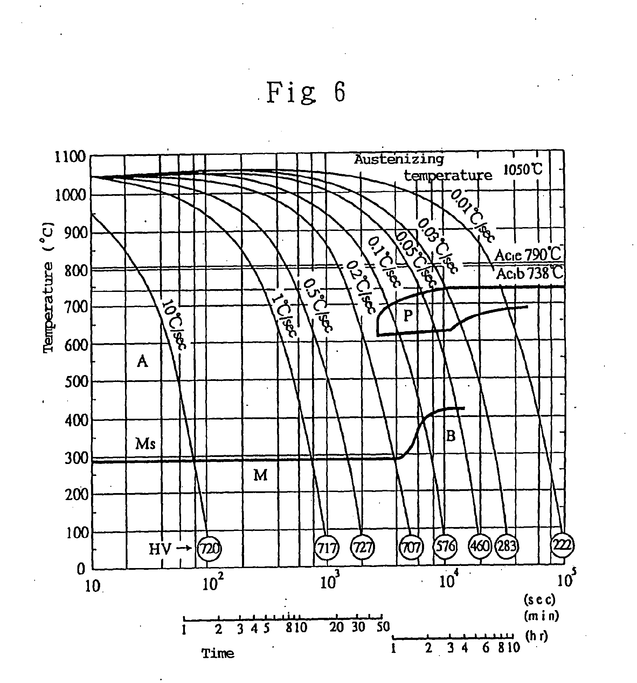

Fig. 6 is a graph showing a relationship between the cooling rate of the quenching treatment and the hardness of the slider 6 after the treatment in respect of the metal material used in this embodiment. Although about HV 653-800 in Vickers Hardness is needed to provide sufficient wear resistance to the ball rolling face 5, according to the graph, even in the case where the cooling rate is the slowest, when the cooling rate is 0.2 °C/sec or higher, the hardness in such a range can be provided to the ball rolling face 5. Normally, the cooling rate in water cooling or oil cooling is extremely as fast as 20 °C/sec or higher and accordingly, there is a concern where heat treatment strain is caused in the slider as quenched. By contrast, when the quenching treatment is carried out by gas cooling as in this embodiment, the cooling rate can be restrained to about 0.2 - 10 °C/sec and a desired hardness can be provided to the ball rolling face 5 while preventing occurrence of heat treatment strain.

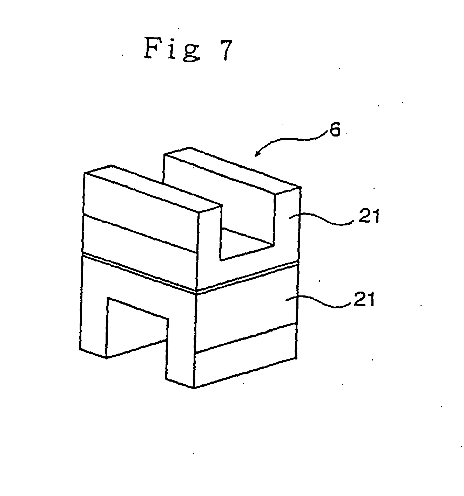

Further, when the respective steps described above have been finished, as shown by Fig. 7, the couple of sliders 21 are bonded in back face coupling and the slider 6 having the ball rolling face 5 subjected to the quenching treatment is completed.

Further, although according to the embodiment, the pair of sliders in both of which the ball rolling faces are formed, are integrated by the diffusion bonding, the present invention can be used in a case where a flange is bonded to the outer diameter of a ball screw nut the inner diameter of which is formed with a ball rolling face in a spiral shape, a case where an extended member is bonded to one end of a ball screw shaft formed with a ball rolling face in a spiral shape and so on.

### Industrial Applicability

As has been explained above, according to the method of fabricating a bearing part of the present invention, in fabricating a bearing part by bonding some attachment body to a bearing main body where a rolling face for a rolling body is formed, stabilization of quality of the bearing part can be achieved by preventing coarsening of crystal grains of a metallographic structure and occurrence of heat treatment strain after a quenching treatment even when the quenching treatment of the rolling face is carried out successive to such a bonding treatment.

Further, scale oxides can be prevented from causing in bonding the bearing main body with the attachment body and accordingly, the skin of the bearing part needs not to clean by shot peening or the like after the bonding operation and a reduction in production cost can be achieved by simplifying the fabrication steps by that amount.

## Claims

1. A method of fabricating a bearing part comprising:
a first step of putting in an atmospheric furnace (23) and bringing into press contact a bearing main body (21) where a rolling face (5) for a rolling body is formed with an attachment body (21) intended to bond thereto with an amorphous sheet (22) being interposed as an insert member between the bearing main body (21) and the attachment body (21) and heating the atmospheric furnace (23) to a predetermined bonding temperature to thereby bond the bearing main body (21) with the attachment body (21) by diffusion bonding;
a second step of controlling a temperature of the atmospheric furnace (23) to a heat treatment temperature suitable for quenching the bearing main body (21) and holding the heat treatment temperature for a predetermined time while maintaining the state of bonding the bearing main body (21) with the attachment body (21); and
a third step of carrying out a quenching treatment in respect of the rolling face (5) of the bearing main body (21) by cooling the bearing main body (21) and the attachment body (21) bonded to each other by introducing a cooling gas into the atmospheric furnace (23).

2. The method of fabricating a bearing part according to Claim 1, wherein the diffusion bonding is carried out in the first step by replacing an atmosphere in the atmospheric furnace (23) by an inert gas and on the other hand cooling an inside of the atmospheric furnace (23) in the third step by increasing a flow rate of the inert gas.

3. The method of fabricating a bearing part according to Claim 1, wherein a cooling rate in the third step is 0.2-10 °C/sec.

## Patentansprüche

1. Verfahren zum Herstellen eines Lagerteils mit:
einem ersten Schritt zum Einschieben eines Lagerhauptkörpers (21) in einen atmosphärischen Heizofen (23) und Herbeiführen eines Presskontakts, wo eine Wälzfläche (5) für einen Wälzkörper mit einem damit verbindbaren Anbaukörper (21) ausgebildet wird, wobei ein amorphes Blech (22) als Einschub zwischen dem Lagerhauptkörper (21) und dem Anbaukörper (21) vorgesehen ist, und zum Aufheizen des atmosphärischen Heizofens (23) zu einer vorbestimmten Bondtemperatur, um **dadurch** den Lagerhauptkörper (21) mit dem Anbaukörper (21) durch Diffusionsbonden zu verbinden;
einem zweiten Schritt zum Steuern einer Temperatur des atmosphärischen Heizofens (23) zu einer Wärmebehandlungstemperatur, die zum Abschrecken des Lagerhauptkörpers (21) geeignet ist, und Halten der Wärmebehandlungstemperatur für eine vorbestimmte Zeit, während der Zustand des Bondens des Lagerhauptkörpers (21) mit dem Anbaukörper (21) aufrechterhalten bleibt; und
einem dritten Schritt zum Ausführen einer Abschreckbehandlung in Bezug auf die Wälzfläche (5) des Lagerhauptkörpers (21) durch Kühlen des Lagerhauptkörpers (21) und des Anbaukörpers (21), die miteinander durch Bonden verbunden sind, durch Einleiten von Kühlgas in den atmosphärischen Heizofen (23).

2. Verfahren zum Herstellen eines Lagerteils nach Anspruch 1, wobei das Diffusionsbonden im ersten Schritt durch Ersetzen einer Atmosphäre in dem atmosphärischen Heizofen (23) durch ein inertes Gas ausgeführt wird, und andererseits im dritten Schritt das Innere des atmosphärischen Heizofens (23) durch Erhöhen der Durchflussrate des inerten Gases gekühlt wird.

3. Verfahren zum Herstellen eines Lagerteils nach Anspruch 1, wobei die Kühlrate im dritten Schritt 0.2-10 °C/sec beträgt.

## Revendications

1. Procédé de fabrication d'une pièce de palier comportant :
une première étape consistant à placer dans un four atmosphérique (23) et amener en contact par pression un corps principal de palier (21) à l'endroit où une face de roulement (5) pour un corps de roulement est formée munie d'un corps de fixation (21) destiné à être assemblé à celle-ci, une feuille amorphe (22) étant intercalée en tant qu'élément rapporté entre le corps principal de palier (21) et le corps de fixation (21), et à chauffer le four atmosphérique (23) jusqu'à une température d'assemblage prédéterminée pour ainsi assembler le corps principal de palier (21) avec le corps de fixation (21) par un assemblage par diffusion ;
une deuxième étape consistant à commander une température du four atmosphérique (23) jusqu'à une température de traitement thermique adaptée pour tremper le corps principal de palier (21) et à maintenir la température de traitement thermique pendant un temps prédéterminé tout en maintenant l'état d'assemblage du corps principal de palier (21) et du corps de fixation (21) ; et
une troisième étape consistant à mettre en oeuvre un traitement de trempe pour ce qui concerne la face de roulement (5) du corps principal de roulement (21) en refroidissant le corps principal de roulement (21) et le corps de fixation (21) assemblés l'un à l'autre en introduisant un gaz de refroidissement dans le four atmosphérique (23).

2. Procédé de fabrication d'une pièce de palier selon la revendication 1, dans lequel l'assemblage par diffusion est exécuté à la première étape en remplaçant une atmosphère dans le four atmosphérique (23) par un gaz inerte et, d'autre part, en refroidissant l'intérieur du four atmosphérique (23) à la troisième étape en augmentant un débit du gaz inerte.

3. Procédé de fabrication d'une pièce de palier selon la revendication 1, dans lequel une vitesse de refroidissement à la troisième étape est de 0,2 à 10 °C/s.
